# EUROPEAN PATENT APPLICATION

(11) **EP 2 634 085 A1**
(43) Date of publication of application: **04.09.2013**
(21) Application number: 12157258.0
(22) Date of filing: 28.02.2012
(51) Int. Cl.: B63H 25/42, B63B 1/06

(54) **Thruster arrangement in a bulbous bow**

(71) Applicant: ABB Oy, 00380 Helsinki (FI)
(72) Inventor: Varis, Jukka, 02710 Espoo (FI); Veikonheimo, Tomi, 00890 Helsinki (FI)
(74) Representative: Hjelt, Pia Dorrit Helene

(57) **Abstract**

The bulbous bow (100) is formed of a longitudinal body with a front end (110), a first side surface (120), a second side surface (130), and a bottom surface (140). The thruster arrangement comprises a tunnel (10) having at least one first tunnel portion (10a) with an inlet opening (11, 11a) at the front end (110) of the bulbous bow (100), and at least one second tunnel portion (10b) comprising a first outlet opening (12) at the first side surface (120) of the bulbous bow (100), and a second outlet opening (13) at the second side surface (130) of the bulbous bow (100), said at least one second tunnel portion (10b) being connected to said at least one first tunnel portion (10a). The arrangement comprises further a propeller (20) in the at least one first tunnel portion (10a) for passing water from the inlet opening (11) to the outlet openings (12, 13), and steering means (31, 32; 31a, 32a) for steering the water flow of the propeller (20) either to the first outlet opening (12) or to the second outlet opening (13).

## Description

### TECHNICAL FIELD

The invention relates to a thruster arrangement in a bulbous bow according to the preamble of claim 1.

A bulbous bow is a protruding bulb at the bow of a ship just below the water line. The bulb modifies the way the water flows around the hull, reducing the drag and thus increasing speed, range, fuel efficiency, and stability. Ships with a bulbous bow generally have a 12 to 15 percent better fuel efficiency than similar ships without them.

Bulbous bows are used in ships e.g. cruisers, tankers transporting oil or liquefied natural gas, vehicle carriers, container ships and ferries.

### BACKGROUND ART

Bulbous bows are often equipped with bow thrusters situated in tunnels passing through the bulbous bow in a direction being transverse to the longitudinal axis of the ship.

The thrusters are used for navigation at low speed e.g. in harbors and other narrow passages. The problem with prior art thrusters is that they work only when the ship is travelling on a low speed. The speed when the thrusters do not work anymore depends on the ship. A general thumb rule is that thrusters do not work at speeds exceeding approximately 3 to 7 knots. Water passing along the sides of the bulbous bow will not enter into the tunnels when the speed of the ship exceeds the limit. There is, however, a need for bow thrusters to work also at higher speeds e.g. when passing a narrow channel in windy weather conditions.

### SUMMARY OF THE INVENTION

The object of the invention is to present an improved bow thruster arrangement, which enables the bow thruster to work also in speeds exceeding the limit of about 5 knots.

The thruster arrangement in the bulbous bow according to the invention is characterized by the features in the characterizing portion of claim 1.

The bulbous bow comprises a longitudinal body with a front end, a first side surface on the port side, a second side surface on the starboard side and a bottom surface. The thruster arrangement comprises a tunnel within the bulbous bow. The tunnel comprises at least one first tunnel portion having an inlet opening at the front end of the bulbous bow, said at least one first tunnel portion extending in the longitudinal direction of the bulbous bow from the inlet opening towards the aft of the bulbous bow, and at least one second tunnel portion comprising a first outlet opening at the first side surface of the bulbous bow, and a second outlet opening at the second side surface of the bulbous bow, said at least one second tunnel portion being connected to said at least one first tunnel portion. The thruster arrangement comprises further a propeller in said at least one first tunnel portion for passing water from the inlet opening to the outlet openings, said propeller being driven by a driving means, and steering means for steering the water flow of the propeller either to the first outlet opening or to the second outlet opening.

The thruster arrangement according to the invention makes it possible to use a propeller rotating only in one direction. There is no need to change the rotation direction of the propeller as is the case in prior art bow thruster arrangements having a tunnel extending across the bulbous bow. The propeller rotates always in the same direction and the steering means determine into which direction, port or starboard, the water transferred with the propeller is directed. A propeller rotating only in one direction can be optimized only for said rotation direction, which leads to better efficiency and lower vibrations compared to a propeller rotating in two opposite directions.

The thruster arrangement according to the invention will work also in higher speeds as the water intake is at the front end of the bulbous bow.

The invention can be used in ships provided with a bulbous bow at the front of the ship, e.g. cruisers, tankers transporting oil or liquefied natural gas, vehicle carriers, container ships and ferries. The power of the thrusters is such ships are larger than 250 kW.

### BRIEF DESCRIPTION OF THE DRAWINGS

Some specific embodiments of the invention are described in the following in detail with reference to the accompanying figures, in which:
Figure 1 shows a bulbous bow of a ship.
Figure 2 shows a horizontal cross section of a thruster arrangement in a bulbous bow according to the invention.
Figure 3 shows a vertical cross section of a part of the thruster arrangement shown in fig. 2.

### DETAILED DESCRIPTION OF SOME SPECIFIC EMBODIMENTS

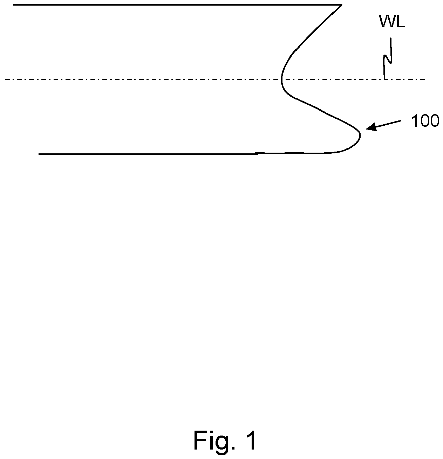

Figure 1 shows a bulbous bow of a ship. The figure shows the stern of the ship with the bulbous bow 100 situated under the water line WL of the stern of the ship.

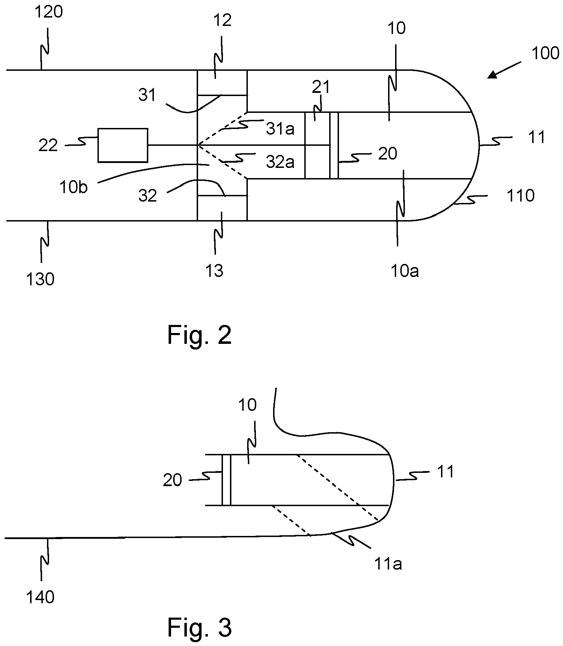

Figure 2 shows a horizontal cross section of a thruster arrangement in a bulbous bow according to the invention. The bulbous bow 100 comprises a longitudinal body with a front end 110, a first side surface 120 on the port side, a second side surface 130 on the starboard side and a bottom surface 140. The thruster arrangement comprises a tunnel 10 with an inlet opening 11 and outlet openings 12, 13, steering means 31, 32 in connection with the outlet openings 12, 13, a propeller 20 within the tunnel 10, and driving means 22 for the propeller 20.

The tunnel 10 comprises a first tunnel portion 10a having an inlet opening 11 at the front end 110 of the bulbous bow 100, said first tunnel portion 10a extending in the longitudinal direction of the bulbous bow 100 from the inlet opening 11 towards the aft of the bulbous bow 100. The tunnel 10 further comprises a second tunnel portion 10b having a first outlet opening 12 at the first side surface 120 of the bulbous bow 100, and a second outlet opening 13 at the second side surface 130 of the bulbous bow 100, said second tunnel portion 10b being connected to the first tunnel portion 10a.

A propeller 20 is situated in the first tunnel portion 10a for passing water from the inlet opening 11 to the outlet openings 12, 13. The propeller 20 is connected to a first end of a shaft 21 and the second opposite end of the shaft 21 is connected to a driving means 22 e.g. an electric motor, a hydraulic motor or some other suitable motor.

There are further steering means 31, 32 in connection with the outlet openings 12, 13 for steering the water flow of the propeller 20 either to the first outlet opening 12 or to the second outlet opening 13. The steering means 31, 32 could comprise some kind of valves in each branch of the second tunnel portion 10b. The steering means 31a, 32a could also comprise some kind of flaps as shown in broken lines in the figure. The flaps 31a, 32a could be pivotably supported on the center line of the first tunnel portion 10a and in that way being able to close and open the passage to the first and second outlet openings 12, 13. The flaps 31a, 32a could be operated e.g. by an electric motor or some other suitable motor (not shown in the figures). Instead of using two separate flaps 31a, 32a only one flap could be used. Said one flap would be divided into two parts with a lower part being situated below the shaft 21 and an upper part being situated above the shaft 21. When said one flap is in either side position the gap between the lower part and the upper part of the flap can be closed with a beam. The beam could be positioned either within the lower part or the upper part of the flap. The height of the gap between the lower part and the upper part of the flap could be a little bit bigger than the thickness of the shaft 21.

Water can thus be directed from the inlet opening 11 via the tunnel 10 with the aid of the propeller 20 to either outlet openings 12, 13. There will thus be side thrust on the bow either to the port or starboard side. There is no need to change the rotation direction of the propeller 20 in this arrangement as is the case in conventional thruster arrangements where the tunnel extends across the bulbous bow 100 from one side surface 120 to the other side surface 130 of the bulbous bow 100. The steering means 31, 32 or 31a, 32a determine to which side i.e. port or starboard the water flow generated by the propeller 20 is directed.

Figure 3 shows a vertical cross section of the thruster arrangement in the bulbous bow. The inlet opening 11 can be situated at the front surface of the front end 110 of the bulbous bow. The broken lines show another alternative where the inlet opening 11a is situated at the bottom surface 140 of the front end 11 of the bulbous bow. The propeller 20 would thus cause a jet type suction of water into the tunnel 10 from the bottom surface of the front end 110 of the bulbous bow. Only the first tunnel portion 10a of the tunnel 10 is shown in this figure. There could be one or more inlet closing members (not shown in the figures) for closing the inlet opening 11, 11a. Such inlet closing members would improve the flow characteristics of the bulbous bow at high speeds when there is no need to use the side thrusters. The closing members could be formed of a door or doors being adapted to the form of the bulbous bow. The inlet openings 11, 11a could also be partly closed by a stationary grill. The flanges of the grill should be in a direction minimizing the resistance caused by them. The inlet openings 11, 11a could also be left completely open in a case where the ship is a slow moving ship.

The first tunnel portion 10a forms the leg of the letter T and the second tunnel portion 10b forms the hat of the letter T in the embodiment shown in the figures. The flow paths from the first tunnel portion 10a to the second tunnel portion 10b can naturally be rounded in an appropriate way in order to allow a smooth flow of the water from the first tunnel portion 10a to the second tunnel portion 10b.

The cross section of the outlet openings 12, 13 could be circular or elliptic. Elliptic outlet openings would increase the hydrodynamic resistance of the ship less than circular outlet openings.

The embodiments of the invention shown in the figures show only one side thruster, but there could naturally be several side thrusters in the bulbous bow 100. The arrangement could be such that all side thrusters use the same inlet opening 11, 11a. The first tunnel portion 10a could branch off into two or more parallel branches being directed in the longitudinal direction of the bulbous bow 100. The branches of the first tunnel portion 10a could be on a separate height within the bulbous bow 100. Each branch of the first tunnel portion 10a would be connected to a second tunnel portion 10b of its own. Each second tunnel portion 10b would have outlet openings of its own at the side surfaces 120, 130 of the bulbous bow 100 as well as steering means for steering the water flow to either outlet opening. Each branch of the first tunnel portion would also have a propeller connected via a shaft to a driving means. This means that each side thruster could be controlled individually.

The examples of the embodiments of the present invention presented above are not intended to limit the scope of the invention only to these embodiments. Several modifications can be made to the invention within the scope of the claims.

## Claims

1. Thruster arrangement in a bulbous bow, said bulbous bow (100) comprising a longitudinal body with a front end (110), a first side surface (120) on the port side, a second side surface (130) on the starboard side and a bottom surface (140), **characterized in that** the arrangement comprises:
- a tunnel (10) within the bulbous bow (100), said tunnel (10) comprising:
- at least one first tunnel portion (10a) having an inlet opening (11, 11a) at the front end (110) of the bulbous bow (100), said at least one first tunnel portion (10a) extending in the longitudinal direction of the bulbous bow (100) from the inlet opening (11) towards the aft of the bulbous bow (100), and
- at least one second tunnel portion (10b) comprising a first outlet opening (12) at the first side surface (120) of the bulbous bow (100), and a second outlet opening (13) at the second side surface (130) of the bulbous bow (100), said at least one second tunnel portion (10b) being connected to said at least one first tunnel portion (10a),
- a propeller (20) in said at least one first tunnel portion (10a) for passing water from the inlet opening (11) to the outlet openings (12, 13), said propeller (20) being driven by a driving means (22), and
- steering means (31, 32; 31a, 32a) for steering the water flow of the propeller (20) either to the first outlet opening (12) or to the second outlet opening (13).

2. Thruster arrangement according to claim 1, **characterized in that** the at least one second tunnel portion (10b) extends in the transverse direction of the bulbous bow (100) from the first side surface (120) to the second side surface (130) of the bulbous bow, whereby the at least one first tunnel portion (10a) forms the foot of the letter T and the at least one second tunnel portion (10b) forms the hat of the letter T.

3. Thruster arrangement according to claim 2, **characterized in that** the steering means (31, 32) comprises a first valve (31) in a first branch of the at least one second tunnel portion (10b) and a second valve (32) in a second branch of the the at least one second tunnel portion (10b), each of said valves opening and closing respective branch and thereby respective outlet opening (12, 13).
